(19) Europäisches Patentamt
European Patent Office
Office européen des brevets

(11) **EP 3 907 941 B1**

(12) **EUROPEAN PATENT SPECIFICATION**

(45) Date of publication and mention
of the grant of the patent:
**20.11.2024 Bulletin 2024/47**

(21) Application number: **20748321.5**

(22) Date of filing: **13.01.2020**

(51) International Patent Classification (IPC):
*H04L 45/02* (2022.01)    *H04L 45/121* (2022.01)
*H04L 45/12* (2022.01)    *H04L 45/125* (2022.01)
*H04L 45/00* (2022.01)

(52) Cooperative Patent Classification (CPC):
**H04L 45/121; H04L 45/02; H04L 45/123;
H04L 45/124; H04L 45/125; H04L 45/70**

(86) International application number:
**PCT/CN2020/071667**

(87) International publication number:
**WO 2020/156110 (06.08.2020 Gazette 2020/32)**

(54) **ROUTING CALCULATION METHOD AND RELATED DEVICE**

VERFAHREN UND ZUGEHÖRIGE VORRICHTUNG ZUR ROUTENKALKULATION

PROCÉDÉ DE CALCUL DE ROUTAGE ET DISPOSITIF ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2019 CN 201910100277**

(43) Date of publication of application:
**10.11.2021 Bulletin 2021/45**

(60) Divisional application:
**24207334.4**

(73) Proprietor: **Huawei Technologies Co., Ltd.
Shenzhen, Guangdong 518129 (CN)**

(72) Inventors:
• **ZHENG, Ruobin
Shenzhen, Guangdong 518129 (CN)**
• **HE, Jianfei
Shenzhen, Guangdong 518129 (CN)**

(74) Representative: **Gill Jennings & Every LLP
The Broadgate Tower
20 Primrose Street
London EC2A 2ES (GB)**

(56) References cited:
**WO-A2-2015/138043     CN-A- 103 368 807
CN-A- 103 403 683     CN-A- 106 134 137
US-A1- 2006 101 142     US-A1- 2012 134 361
US-A1- 2017 070 426**

EP 3 907 941 B1

**Description**

**TECHNICAL FIELD**

This application relates to the communications field, and in particular, to a route computation method and a related device.

**BACKGROUND**

Currently, there are two development trends of internet computation, and one is a ubiquitous computing capability. That is, computing containers with different scales of computing capabilities are widely distributed in different distances between users. These computing containers may be thousands of base stations that have computing capabilities and that are brought by tens of billions of intelligent terminals, billions of home gateways worldwide, and future mobile edge computing (mobile edge computing, MEC) in each city, or may be hundreds of cloud-hosted (Cloud CO) equipment rooms brought by network function virtualization (network function virtualization, NFC), and dozens of large-scale cloud data centers in each country. The other is a trend that features being microservice-based or serverless (Serverless). A conventional client-server (client-server) mode is deconstructed. Applications on a server (server) side are deconstructed into "functional components" for being deployed on a cloud platform. The functional components are scheduled by a same application programming interface gateway (application programming interface gateway, API gateway). In this way, an event-triggering function component can "be used immediately after being required and be ended immediately after being used". That is, the functional component can be dynamically instantiated as required. A service logic of a server is transferred to a client side. A client only needs to focus on a "computation function" but does not need to be aware of computing resources such as a computation place and a server/virtual machine/container. Therefore, the client needs to focus only on the service logic and implement that "a function is a service".

There is a gap between a current internet architecture and the foregoing trends. In a space dimension, a current internet topology is an "end-to-end model", that is, a network is in the middle and computation is in the periphery. However, in an edge computing or ubiquitous computing scenario, an internet topology is changed to computation and is embedded in a network. A current internet protocol (Internet Protocol, IP) route technology is based on the "end-to-end model" and considers only IP reachability. The network and the computation are two uncorrelated independent worlds. Consequently, it is difficult to construct, through the network, a highly efficiently organized distributed computing system by using a ubiquitous capability.

US 2017/070426 A1 describes a path computation element for temporal tunnel services. US 2006/101142 A1 describes a technique for selecting a path computation element.

**SUMMARY**

Embodiments of this application provide a route computation method and a related routing domain used to inject a computing capability, as routing information, into a routing domain, so that the computing capability is added to route computation, thereby achieving optimal computation and network resource utilization.

According to a first aspect, an embodiment of this application provides a routing domain. The routing domain includes a computing container and a network router. The network router is a routing node that supports route computation. The computing container is connected to the network router through a virtual link. The computing container is configured to run a routing protocol, where the routing protocol is used to carry a computing capability of the computing container or the computing capability of the computing container and an identifier of a service or function; and send the computing capability of the computing container or the computing capability of the computing container and the identifier of the service or function to the network router by using the routing protocol. The network router is configured to obtain the computing capability, obtain a network capability of the routing domain; and compute a route based on the computing capability; or compute a route based on the computing capability and the network capability; and diffuse the computing capability or the computing capability and the identifier of the service or function to each network router in the routing domain and/or to another routing domain

It can be learned from the technical solution provided in this embodiment of this application that the computing container diffuses the computing capability of the computing container and the identifier of the service or function in the routing domain, so that the computing capability is considered during route computation, thereby achieving optimal computation and network resource utilization.

The present invention is defined by the appended claims. Embodiments, which do not fall within the scope of the appended set of claims are to be interpreted as background information, useful for understanding the invention.

## BRIEF DESCRIPTION OF DRAWINGS

FIG. 1 is a schematic structural diagram of a current network;

FIG. 2 is a schematic structural diagram of a routing domain according to an embodiment of this application;

FIG. 3 is a schematic diagram of an embodiment of a routing domain according to an embodiment of this application;

FIG. 4 is a schematic diagram of a principle of running a routing protocol to perform route computation in a routing domain according to an embodiment of this application;

FIG. 5 is a schematic diagram of an embodiment of a computing container according to an embodiment of this application;

FIG. 6 is a schematic functional block diagram of a computing container according to an embodiment of this application;

FIG. 7 is a schematic functional block diagram of application software or an operating system in a computing container according to an embodiment of this application;

FIG. 8 is a schematic diagram of another embodiment of a computing container according to an embodiment of this application;

FIG. 9 is a schematic diagram of an embodiment of a network router according to an embodiment of this application;

FIG. 10 is a schematic functional block diagram of a network router according to an embodiment of this application; and

FIG. 11 is a schematic diagram of another embodiment of a network router according to an embodiment of this application.

## DESCRIPTION OF EMBODIMENTS

Embodiments of this application provide a route computation method and a related device, used to inject a computing capability, as routing information, into a routing domain, so that the computing capability is added to route computation, thereby achieving optimal computation and network resource utilization.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, product, or device.

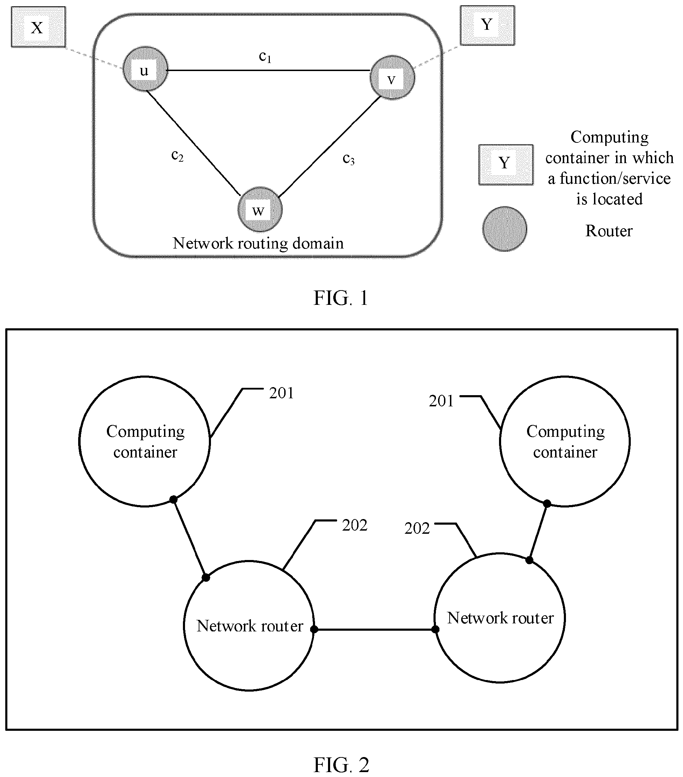

Currently, there are two development trends of internet computation, and one is a ubiquitous computing capability. That is, computing containers with different scales of computing capabilities are widely distributed in different distances between users. These computing containers may be thousands of base stations that have computing capabilities and that are brought by tens of billions of intelligent terminals, billions of home gateways worldwide, and MEC in each city, or hundreds of cloud CO equipment rooms brought by NFC, and dozens of large-scale cloud data centers in each country. However, there is a gap between a current internet architecture and the foregoing trends. In a space dimension, a current internet topology is an "end-to-end model" (that is, a network is in the middle and computation is in the periphery). As shown in FIG. 1, a set of nodes (Node) or vertices (Vertical) included in a current network routing domain is (u, v, w). A set of edges (Edge) connecting neighboring nodes is $\{(u, v)\ c_1, (v, w)\ c_2, (w, u)\ c_3\ 1$, where $c_1$, $c_2$, and $c_3$ are weighted values of the edges. In the network routing domain shown in FIG. 1, a node herein is a router or a network routing node, an edge herein is a link (Link) between neighboring nodes, and a weighted value herein may also be referred to as a link state (Link state). The link between the neighboring nodes may be a direct physical link, or may be a logical link that is reachable through a network. In FIG. 1, X and Y are respectively computing containers in which a function x and a function y are located, and are located outside the routing domain. Therefore, a current IP route technology is based on the "end-to-end model" and considers only IP reachability. The network and the computation are two uncorrelated independent worlds. Consequently, it is difficult to construct, through the network, a highly efficiently organized distributed computing system by using a ubiquitous capability.

To resolve the problem, an embodiment of this application provides a routing domain. The routing domain includes a computing container and a network router. The network router is a routing node that supports route computation. The computing container is connected to the network router through a virtual link. The computing container is configured to run a routing protocol, where the routing protocol is used to carry a computing capability of the computing container or the computing capability of the computing container and an identifier of a service or function; and send the computing capability of the computing container or the computing capability of the computing container and the identifier of the service or function to the network router by using the routing protocol. The network router is configured to obtain a network capability of the routing domain; and compute a route based on the computing capability; or compute a route based on the computing capability and the network capability.

Specifically, an architecture of the routing domain may be shown in FIG. 2. The network routing domain includes a computing container 201 and a network router 202. A quantity of computing containers 201 and a quantity of network routers 202 are not limited herein. The computing container 201 is connected to the network router 202 through a virtual link. The virtual link may be a direct physical link, or may be a logical link that is reachable through a network. It may be understood that the computing container 201 in this embodiment of this application may be a server, a virtual machine, a container, or a smaller unit that provides a computing resource, and the network router 202 may be a router.

Based on the routing domain shown in FIG. 2, a route computation process in the routing domain is described.

The computing container 201, as a route initiator, runs a route daemon process. Then, in the route daemon process, an identifier of a service or function corresponding to the computing container 201 and a computing capability parameter of the computing container 201 are used as a virtual link state and sent to a neighboring network router 202 by using a routing protocol (where the routing protocol includes an interior gateway protocol (interior gateway protocol, IGP) or a border gateway protocol (border gateway protocol, BGP)). The routing protocol is used to carry a computing capability of the computing container or the computing capability of the computing container and an identifier of a service or function. Then, the network router 202 obtains a network capability of the routing domain. Finally, the network router 202 computes a route based on the network capability and the computing capability of the computing container 201 or the network router 202 computes a route based on the computing capability of the computing container.

Optionally, the computing container may also inject the computing capability or the computing capability of the computing container and the identifier of the service or function into the routing domain in a form of the virtual link state. Then, after receiving the virtual link state, the network router diffuses the virtual link state to other network routers in the routing domain, and even to another neighboring routing domain.

Optionally, after computing the route, the network router may further generate a routing table based on the identifier of the service or function and the route.

It may be understood that the computing capability includes the computing capability parameter or a computing metric value, and the computing capability parameter includes at least one of a throughput, a server load, and a computing delay. The network capability includes a network metric value or a network parameter, and the network parameter includes at least one of a network bandwidth and a network delay.

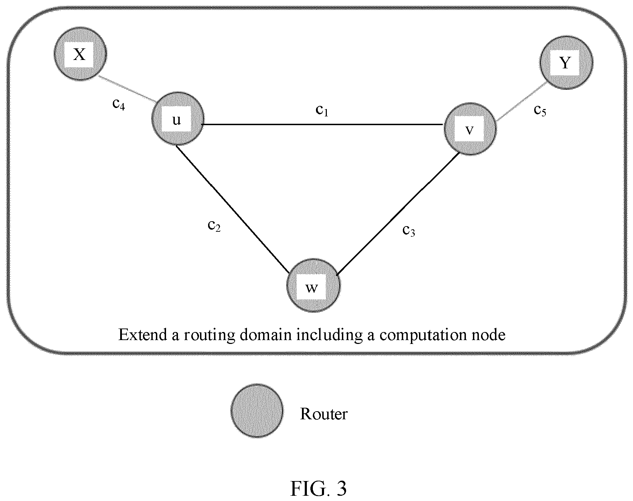

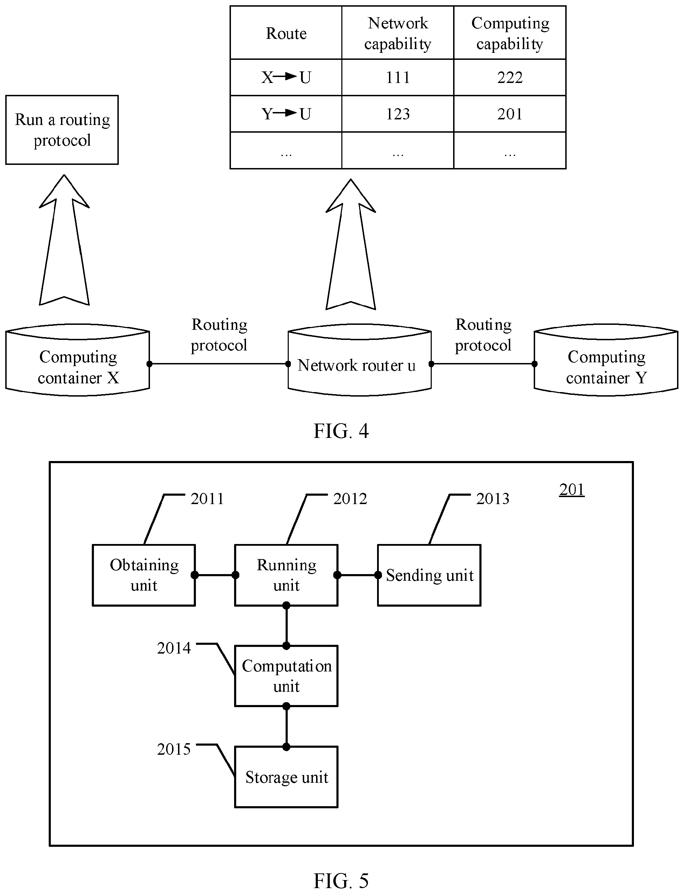

In an example, an architecture of the routing domain may be shown in FIG. 3. A set of nodes or vertices included in the network routing domain is {u, v, w, X, Y}, and a set of edges (Edge) connecting neighboring nodes is {(u, v) c1, (v, w) c2, (w, u) c3, (X, u) c4, (Y, v) c5}. In the network routing domain, the computing container (for example, a computing container X in which a function x is located and a computing container Y in which a function y is located) is also added, as a routing node, to a set of routing nodes. In this application file, such a special router may be referred to as the computing container 201, and is used to distinguish from a conventional network router 202. In FIG. 3, nodes u, v, and w are each the network router 202. In addition, a special edge is added to the network routing domain to serve as a virtual link between the computing container 201 and a neighboring network router 202, where c4 and c5 are weighted values of such a special edge, and may also be referred to as a virtual link state. The virtual link state may include "a function or service ID" and "a throughput (Throughput), a computing delay (Compute Delay), and/or a server load (Server Load)" of a corresponding computing container, and may even include a related computing capability parameter such as central processing unit (central processing unit, CPU) usage or storage usage. However, a route computation principle in the routing domain shown in FIG. 3 may be shown in FIG. 4. The computing container X is used as an example. The computing container X runs a routing protocol and initiates routing, so that the computing container X sends a computing capability of the computing container X to the network router u by using a routing protocol. The network router u sends the computing capability of the computing container X to another network router or computing container in the routing domain by using a routing protocol. Then, each network router or computing container computes a route separately. For example, the network router u sends the computing capability of the computing container X to the network router v and the network router w by using the routing protocol. In addition, the network router v sends the computing capability of the computing container X to the network router w and the computing container Y by using the routing protocol. In addition, the network router w may also send the computing capability of the computing capability X to the network router u and the network router v by using the routing protocol. Similarly, a computing capability of the computing container Y may also be diffused to each network router and computing container in the routing domain by using the routing protocol. Then, the network router u may compute a route from the network router u to the computing container X based on the computing capability of the computing container X and/or the network capability of the routing domain; the network router u may perform cloud computing to obtain a route from the network router u to the computing container Y by using the computing capability of the computing container Y and/or the network capability of the routing domain; the network router u may compute a route to the network router v based on link state information of the network router v and the network capability of the routing domain; and so on.

Specifically, a specific process in which the network router 202 or computing container 201 computes a route based on the computing capability and the network capability is as follows:

In a possible implementation, the network router 202 or the computing container 201 obtains a computing metric value based on the computing capability parameter, and obtains a network metric value based on the network parameter. Then, the network router 202 or the computing container 201 computes the route based on the computing metric value and the network metric value. In addition, when the route is computed by using the computing metric value and the network metric value, comprehensive computation may be performed based on a specific service or function. For example, for a service that requires the computing capability, in a routing algorithm running on each node, the computing metric value is primarily used and the network metric value is secondarily used, to compute an optimal route; and for a conventional transmission-type service, because an edge computing capability is not required, in a routing algorithm running on each node, the network metric value is primarily used to compute an optimal route.

In another possible implementation, the network router 202 or the computing container 201 obtains a composite metric value through computation based on the computing capability parameter and the network parameter. Then, the network router 202 and the computing container 201 compute the route based on the composite metric value.

In another possible implementation, the network router 202 or the computing container 201 obtains a computing metric value through computation based on the computing capability parameter. Then, the network router 202 or the computing container 201 computes the route based on the computing metric value.

Optionally, the network router 202 or the computing container 201 obtains the network metric value through computation based on the network parameter by using a first formula or a nonlinear weighting algorithm.

The first formula is Network metric value = $\alpha_1 \times$ Network bandwidth + $\gamma_1 \Sigma$Network delay, where $\alpha_1$ and $\gamma_1$ are weighted values.

Optionally, the network router 202 or the computing container 201 obtains the computing metric value through computation based on the computing capability parameter by using a second formula or a nonlinear weighting algorithm.

The second formula is $$\text{Computing metric value} = \frac{\alpha_2 \times \text{Throughput}}{\beta_1 - \beta_2 \times \text{Server load}} + \gamma_2 \times \text{Computing delay}$$, where $\alpha_2$, $\beta_1$, $\beta_2$, and $\gamma_2$ are weighted values.

Optionally, the network router 202 or the computing container 201 obtains the composite metric value through computation based on the computing capability parameter and the network parameter by using a third formula.

The third formula is:

$$\text{Composite metric value} = \alpha_1 \times \text{Network bandwidth} + \frac{\alpha_2 \times \text{Throughput}}{\beta_1 - \beta_2 \times \text{Server load}} + \gamma_1 \times \Sigma\text{Network delay} +$$

$$\gamma_2 \times \text{Computing delay}$$, where

$\alpha_1$, $\gamma_1$, $\alpha_2$, $\beta_1$, $\beta_2$, and $\gamma_2$ are weighted values.

It may be understood that each weighted value in the first formula, the second formula, and the third formula may be appropriately set based on a service feature. For example, for a delay-sensitive service, a delay-related coefficient may be appropriately increased; and for a service that requires high bandwidth, a throughput-related or network bandwidth-related coefficient may be appropriately increased.

A computing capability of the computing container 201 is in a one-to-one correspondence with the identifier of the service or function. However, when a service or function is not instantiated in the computing container, the computing capability of the computing container 201 is in a one-to-one correspondence with a benchmark service or function identifier. That is, the computing container 201 may use the computing capability of the computing container 201 and the benchmark service or function identifier as a virtual link state for being diffused in the routing domain, so that each network router 202 or computing container 201 in the routing domain can determine a computing resource or storage resource suitable for the service or function through computation. In addition, after it is determined that the service or function is instantiated in the routing domain, the benchmark service or function identifier is replaced with the identifier of the service or function, and the identifier of the service or function and a computing capability parameter of the computing container in which the instantiation is performed are diffused in the routing domain. It may be understood that the identifier of the service or function may be a name or an identifier that is uncorrelated to a location; the identifier of the service or function is mapping of an information object; the identifier of the service or function is a function of processing an information object; the identifier of the service or function is a specific service; or the identifier of the service or function is a network address. A specific case is not limited herein.

In this embodiment of this application, the route computed by the network router is a route from the network router to each routing node in the routing domain, and the route computed by the computing container or application software or operating system is a route from the service or function consumer to each computing container.

In this embodiment of this application, the computing container 201 diffuses the computing capability of the computing container 201 and the identifier of the service or function in the routing domain, so that the computing capability is considered when a routing table is generated during route computation, thereby achieving optimal computation and network resource utilization. In addition, the computing container implements automatic allocation of computation, storage, and network resources, to adapt to a rapid service change or service mobility of the user. In this embodiment of this application, the network router performs route computation based on the computing capability of the computing container and the network parameter, to achieve optimal computation and network resource utilization.

Specifically, referring to FIG. 5, an embodiment of this application provides a computing container 201, including: an obtaining unit 2011, configured to obtain a computing capability or the computing capability and an identifier of a service or function; a running unit 2012, configured to run a routing protocol, where the routing protocol is used to carry the computing capability or the computing capability and the identifier of the service or function that is/are obtained by the obtaining unit 2011; and a sending unit 2013, configured to send the computing capability or the computing capability and the identifier of the service or function to the network router by using the routing protocol run by the running unit 2012. It may be understood that the computing capability includes a computing metric value or a computing capability parameter, where the computing capability parameter includes at least one of a throughput, a computing delay, and a server load.

Optionally, the computing container 201 sends the computing capability or the computing capability and the identifier of the service or function, as a virtual link state, to the network router 202.

Optionally, the computing container 201 further includes a computation unit 2014, configured to compute a route based on the computing capability, where the computing capability includes a computing capability parameter or a computing metric value, and the computing capability parameter includes at least one of a throughput, a server load, and a computing delay.

Optionally, the obtaining unit 2011 of the computing container 201 is further configured to obtain a network capability of a routing domain in which the computing container 201 is located, where the network capability includes a network metric value or a network parameter, the network parameter includes at least one of a network bandwidth and a network delay, the computing capability includes a computing capability parameter or a computing metric value, and the computing capability parameter includes at least one of a throughput, a server load, and a computing delay.

The computation unit 2014 is further configured to compute a route based on the computing capability and the network capability.

Optionally, the computation unit 2014 is specifically configured to obtain the network metric value through computation based on the network parameter by using a first formula or a nonlinear weighting algorithm.

The first formula is Network metric value = $\alpha_1 \times$ Network bandwidth + $\gamma_1 \Sigma$Network delay, where $\alpha_1$ and $\gamma_1$ are weighted values.

Optionally, the computation unit 2014 is specifically configured to obtain the computing metric value through computation based on the computing capability parameter by using a second formula or a nonlinear weighting algorithm.

The second formula is $$\text{Computing metric value} = \frac{\alpha_2 \times \text{Throughput}}{\beta_1 - \beta_2 \times \text{Server load}} + \gamma_2 \times \text{Computing delay}$$, where $\alpha_2$, $\beta_1$, $\beta_2$. and $\gamma_2$ are weighted values.

Optionally, the computation unit 2014 is specifically configured to: obtain a composite metric value through computation based on the computing capability parameter and the network parameter by using a third formula, and compute the route based on the composite metric value to generate a routing table.

The third formula is:

$$\text{Composite metric value} = \alpha_1 \times \text{Network bandwidth} + \frac{\alpha_2 \times \text{Throughput}}{\beta_1 - \beta_2 \times \text{Server load}} + \gamma_1 \times \sum\text{Network delay} +$$

$\gamma_2 \times \text{Computing delay}$, where $\alpha_1$, $\gamma_1$, $\alpha_2$, $\beta_1$, $\beta_2$, and $\gamma_2$ are weighted values.

The computing container 201 further includes a storage unit 2015. The storage unit 2015 is configured to store the computing capability or the computing capability and the identifier of the service or function running in the computing container 201, and the network capability.

Optionally, the computing container 201 further includes application software or an operating system. The application software or the operating system may be configured to: compute the route based on the computing capability, or compute the route based on the computing capability and the network capability.

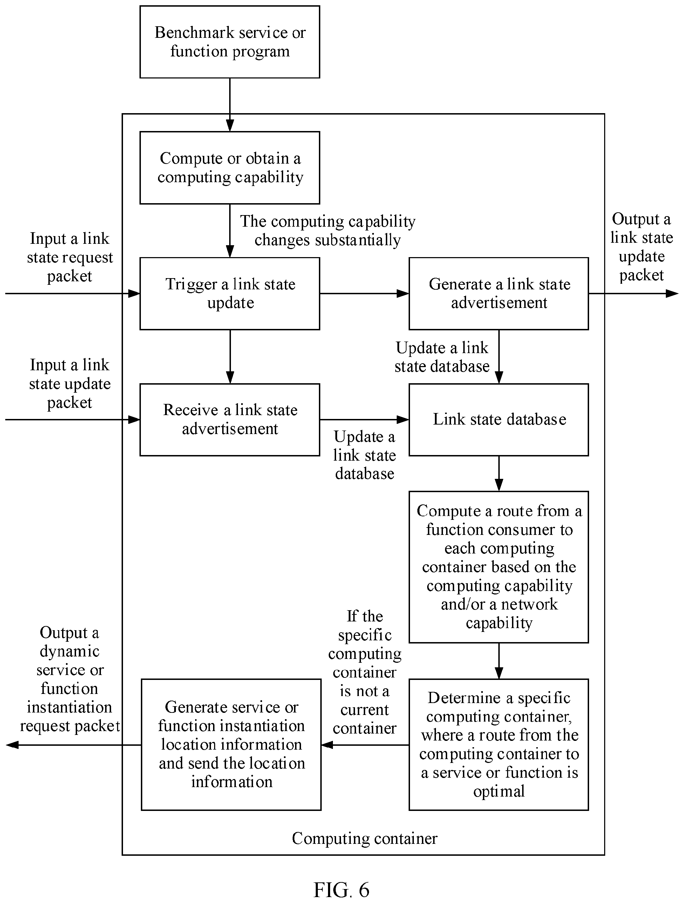

The following describes the computing container 201 by using a specific functional block diagram. Specifically, referring to FIG. 6, the computing container 201 obtains link state information of the computing container 201. The link state information is used to indicate a computing capability of the computing container 201, the computing capability may be a computing metric value or a computing capability parameter, and the computing capability parameter includes at least one piece of information of a throughput, a server load, and a computing delay. When the computing capability is the computing capability parameter, the computing container 201 may further obtain a computing metric value through computation based on the computing capability parameter by using the second formula, and store the computing metric value in a storage unit (which may also be referred to as a link state database) of the computing container 201. It may be understood that the computing container 201 triggers a link state update when the computing metric value or the computing capability parameter substantially changes, to update the link state database. For example, when the computing metric value is less than a first threshold, the computing metric value is greater than a second threshold, or a parameter in the computing capability parameter is greater than or less than a preset threshold, the link state database of the computing container 201 is updated, or the computing capability parameter or the computing metric value is re-sent to a neighboring network router 202. In addition, the computing container 201 may further receive a link state request (link state request, LSR) or link state update (link state update, LSU) packet sent by the neighboring network router 202. The link state request may further carry a link state advertisement of the network router or a network parameter of the routing domain, and the LSU packet carries a to-be-updated directly-connected interface state of the neighboring network router. Then, the computing container 201 stores the link state advertisement of the network router and the network parameter of the routing domain. It may be understood that an agreed neighbor relationship is first established between the computing container 201 and the network router 202. Then, the computing container 201 and the network router 202 start to exchange a link state advertisement (link state advertisement, LSA) with each other. The link state advertisement may be understood as an advertisement that is generated by each routing node and that is for describing a directly-connected interface state of the routing node (including an interface overhead, a relationship with a neighboring router, and the like). For the computing container in this embodiment of this application, the computing container generates an advertisement for describing a computing capability state of the computing container (including an identifier of a service or function and a computing capability of the computing container; and further including a relationship with a neighboring network router, and the like). Then, the computing container 201 maintains the link state database of the computing container 201. To be specific, after receiving the link state advertisement, the computing container 201 updates a corresponding link state advertisement entry in the link state database. In brief, the computing container 201 places the collected link state advertisement in the routing domain into the link state database of the computing container 201, so that the computing container 201 can clearly learn of a computation or storage resource topology of the entire routing domain by using the link state database. The computing container 201 may further generate a corresponding link state advertisement after triggering the link state update, and send the link state advertisement as a link state update packet to the neighboring network router. The computing container 201 may further compute a route based on a computing capability in the link state advertisement in the link state database. If a computing metric value and/or a network metric value already exist/exists in the link state advertisement, route computation is directly performed based on the computing metric value and the network capability to obtain a route from a service/function consumer to each computing container. If the link state advertisement carries a computing capability parameter and/or a network parameter, the computing container 201 first obtains a computing metric value based on the computing capability parameter, and obtains a network metric value based on the network parameter; and then computes the route based on the computing metric value and the network metric value. In this embodiment of this application, a route computation algorithm may be a shortest path first (shortest path first, SPF) algorithm or another algorithm. This is not specifically limited herein. The SPF is a core algorithm of an IGP-type routing protocol and is used to make decision on optimal route selection in a complex network. After computation using the SPF algorithm, each computing container computes a loop-free "tree" that covers the entire network, has a shortest path, and roots in a service or function consumer. With this "tree", the computing container actually learns of an optimal path from a service or function consumer to each computing container. Then, the computing container determines a specific computing container based on the route. If the computing container determines that the specific computing container is not the computing container, the computing container generates and outputs a location for re-instantiating a service or function. The location may be an identifier, a network address, or the like of the specific computing container. It may be understood that, when the computing container outputs information about the location, the receiver may be application layer software or an operating system. Therefore, instantiation or migration of the service or function is implemented.

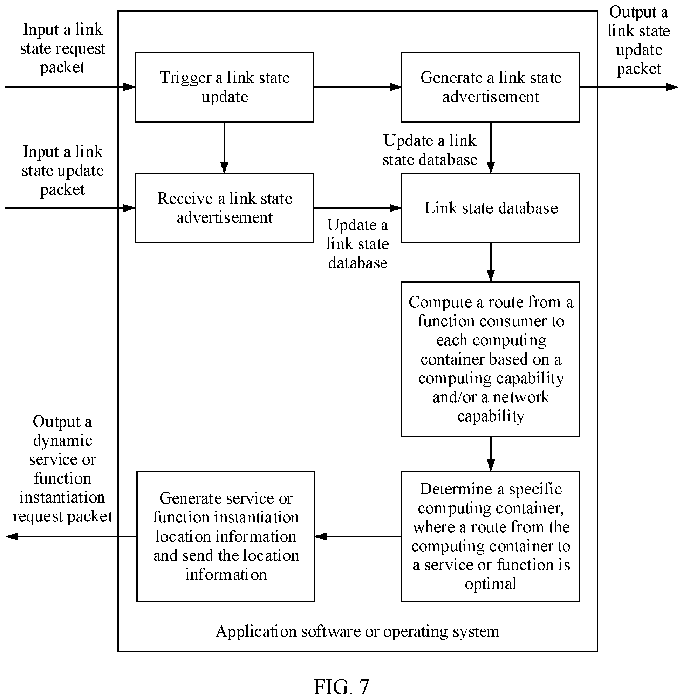

In this embodiment, the application layer software or operating system in the computing container 201 may be considered as a special router. A functional block diagram of the application layer software or operating system may be shown in FIG. 7. The application software or the operating system receives a link state request (link state request, LSR) or a link state update (link state update, LSU) packet of a neighboring network router or the computing container. The link state request may further carry a link state advertisement of the network router or a network parameter of the routing domain, and the LSU packet carries a to-be-updated direct interface state of the neighboring network router. Then, the application software or the operating system stores the link state advertisement of the network router and the network parameter of the routing domain. The computing capability may be a computing metric value or a computing capability parameter, and the computing capability parameter includes at least one piece of information of a throughput, a server load, and a computing delay. The network capability may be a network metric value or a network parameter, and the network parameter includes at least one piece of information of a network bandwidth or a network delay. When the computing capability is the computing capability parameter, the application software or the operating system may further obtain a computing metric value through computation based on the computing capability parameter by using the second formula, and store the computing metric value in a storage unit (which may also be referred to as a link state database) of the application software or the operating system. When the network capability is the network parameter, the application software or the operating system may alternatively obtain a network metric value through computation based on the network parameter by using a second formula, and store the network metric value in a storage unit (which may also be referred to as a link state database) of the application software or the operating system. It may be understood that the application software or the operating system triggers a link state update when the computing metric value, the computing capability parameter, the network metric value, or the network parameter substantially changes, to update the link state database. For example, when the computing metric value is less than a first threshold, the computing metric value is greater than a second threshold, or a parameter in the computing capability parameter is greater than or less than a preset threshold, the link state database of the application software or the operating system is updated, or the computing capability parameter or the computing metric value is re-sent to the neighboring network router or the computing container.

It may be understood that an agreed neighbor relationship is first established between the application software or the operating system and the network router 202. Then, the application software or the operating system and the network router 202 start to exchange a link state advertisement (link state advertisement, LSA) with each other. The link state advertisement may be understood as an advertisement that is generated by each routing node and that is for describing a direct interface state of the routing node (including an interface overhead, a relationship with a neighboring router, and the like). For the computing container in this embodiment of this application, the computing container generates an advertisement for describing a computing capability state of the computing container (including an identifier of a service or function and a computing capability of the computing container; and further including a relationship with a neighboring network router, and the like). The application software or the operating system maintains the link state database of the application software or the operating system. To be specific, after receiving the link state advertisement, the application software or the operating system updates a corresponding link state advertisement entry in the link state database. In brief, the application software or the operating system places the collected link state advertisement in the routing domain into the link state database of the application software or the operating system, so that the application software or the operating system can clearly learn of a computation or storage resource topology of the entire routing domain by owning the link state database. The application software or the operating system may further generate a corresponding link state advertisement after triggering the link state update, and send the link state advertisement as a link state update packet to the neighboring network router. The application software or the operating system may further compute a route based on a computing capability in the link state advertisement in the link state database. If a computing metric value and/or a network metric value already exist/exists in the link state advertisement, route computation is directly performed based on the computing metric value and the network capability to obtain a route from a service/function consumer to each computing container. If the link state advertisement carries a computing capability parameter and/or a network parameter, the application software or the operating system first obtains a computing metric value based on the computing capability parameter, and obtains a network metric value based on the network parameter; and then computes the route based on the computing metric value and the network metric value. In this embodiment of this application, a route computation algorithm may be a shortest path first (shortest path first, SPF) algorithm or another algorithm. This is not specifically limited herein. The SPF is a core algorithm of an IGP-type routing protocol and is used to make an optimal route selection decision in a complex network. After computation using the SPF algorithm, each computing container computes a loop-free "tree" that covers the entire network, has a shortest path, and roots in a service or function consumer. With this "tree", the computing container actually learns of an optimal path from a service or function consumer to each computing container. Then, the computing container determines a specific computing container based on the route. If the computing container determines that the specific computing container is not the computing container, the computing container generates and outputs a location for re-instantiating a service or function. The location may be an identifier, a network address, or the like of the specific computing container. It may be understood that, when the computing container outputs information about the location, the receiver may be application layer software or an operating system. Therefore, instantiation or migration of the service or function is implemented.

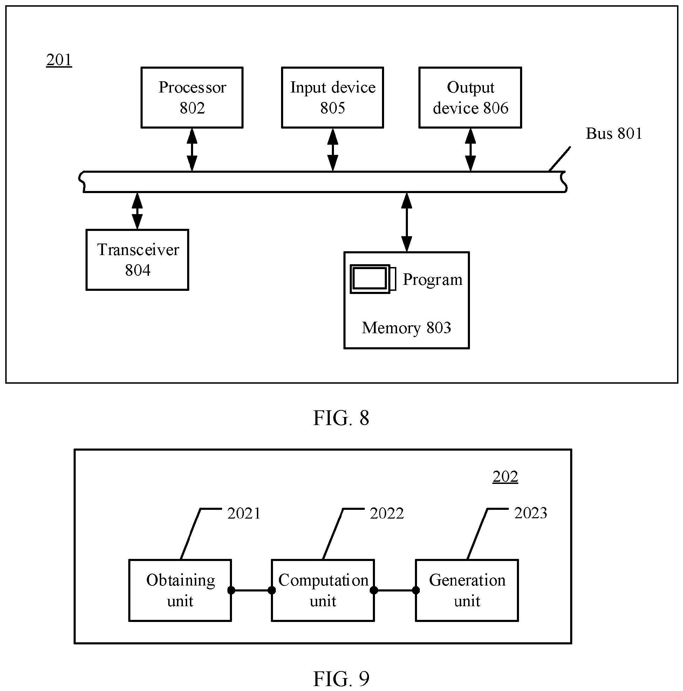

FIG. 8 is a possible schematic structural diagram of the computing container 201 according to the foregoing embodiment. The computing container 201 may include: a processor 802, a computer-readable storage medium/memory 803, a transceiver 804, an input device 805, an output device 806, and a bus 801. The processor, the transceiver, the computer-readable storage medium, and the like are connected by using the bus. A specific connection medium between the foregoing components is not limited in this embodiment of this application.

The transceiver 804 sends a computing capability to a network router 202.

In an example, the processor 802 may include a baseband circuit, for example, may compute a route to generate a routing table. The transceiver 804 may include a radio frequency circuit, to perform processing such as modulation and amplification on link state information generated based on the computing capability, and then send the link state information to the network router.

In another example, the processor 802 may run an operating system to control a function between each device and each component. The transceiver 804 may include a baseband circuit and a radio frequency circuit.

It may be understood that FIG. 8 shows only a simplified design of the computing container. During actual application, the computing container may include any quantity of transceivers, processors, memories, and the like, and all computing containers that can implement this application are within the protection scope of this application.

The processor 802 in the computing container 201 may be a general-purpose processor, for example, a general-purpose central processing unit (CPU), a network processor (network processor, NP), or a microprocessor, or may be an application-specific integrated circuit (application-specific integrated circuit, ASIC), or one or more integrated circuits configured to control program execution in the solutions of this application, or may be a digital signal processor (digital signal processor, DSP), a field programmable gate array (field-programmable gate array, FPGA) or another programmable logic device, a discrete gate or a transistor logic device, or a discrete hardware component. Alternatively, the controller/processor may be a combination of processors implementing a computation function, for example, a combination of one or more microprocessors, or a combination of a DSP and a microprocessor. The processor usually performs logical and arithmetic operations based on program instructions stored in the memory.

The bus 801 may be a peripheral component interconnect (peripheral component interconnect, PCI) bus, an extended industry standard architecture (extended industry standard architecture, EISA) bus, and or the like. The bus may be classified into an address bus, a data bus, a control bus, and the like. For ease of representation, only one thick line is used to represent the bus in FIG. 8, but this does not mean that there is only one bus or only one type of bus.

The foregoing computer-readable storage medium/memory 803 may further store an operating system and another application program. Specifically, the program may include program code, and the program code includes computer operation instructions. More specifically, the memory may be a read-only memory (read-only memory, ROM), another type of static storage device that can store static information and instructions, a random access memory (random access memory, RAM), another type of dynamic storage device that can store information and instructions, a magnetic disk memory, or the like. The memory 803 may be a combination of the foregoing storage types. In addition, the computer-readable storage medium/memory may be located in the processor, or may be located outside the processor, or distributed on a plurality of entities including the processor or a processing circuit. The computer-readable storage medium/memory may be specifically embodied in a computer program product. For example, the computer program product may include a computer-readable medium in a packaging material.

Alternatively, an embodiment of this application further provides a universal processing system. For example, the universal processing system is usually referred to as a chip. The universal processing system includes one or more microprocessors that provide a processor function, and an external memory that provides at least a part of a storage medium. All these components are connected to another supporting circuit by using an external bus architecture. When instructions stored in the memory are executed by the processor, the processor is enabled to execute some or all steps of the computing container in the route computation method.

Method or algorithm steps described in combination with the content disclosed in this application may be implemented by hardware, or may be implemented by a processor by executing software instructions. The software instructions may be formed by a corresponding software module. The software module may be located in a RAM memory, a flash memory, a ROM memory, an EPROM memory, an EEPROM memory, a register, a hard disk, a removable hard disk, a CD-ROM, or a storage medium of any other form known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in user equipment. Certainly, the processor and the storage medium may exist in the user equipment as discrete components.

It may be understood that, after the computing container generates the routing table, the computing container does not need to maintain the routing table or perform route forwarding.

In the embodiments of this application, the computing container diffuses the computing capability of the computing container and the identifier of the service or function in the routing domain, so that the computing capability is considered when the routing table is generated during route computation, thereby achieving optimal computation and network resource utilization. In addition, the computing container implements automatic allocation of computation, storage, and network resources, to adapt to a rapid service change or service mobility of the user.

Specifically, referring to FIG. 9, an embodiment of this application provides a network router 202, including: an obtaining unit 2021, configured to obtain a computing capability of a computing container, and obtain a network capability of a routing domain in which the network router 202 is located; and

a computation unit 2022, configured to compute a route based on the computing capability, or compute a route based on the computing capability and the network capability.

Optionally, the computing capability includes a computing capability parameter or a computing metric value, and the computing capability parameter includes at least one of a throughput, a server load, and a computing delay.

The network capability includes a network metric value or a network parameter, and the network parameter includes at least one of a network bandwidth and a network delay.

Optionally, the computation unit 2022 is specifically configured to obtain the computing metric value based on the computing capability parameter; and compute the route based on the computing metric value.

Optionally, the computation unit 2022 is specifically configured to obtain the computing metric value based on the computing capability parameter, and obtain the network metric value based on the network parameter; and compute the route based on the computing metric value and the network metric value.

Optionally, the computation unit 2022 is specifically configured to obtain the network metric value through computation based on the network parameter by using a first formula or a nonlinear weighting algorithm.

The first formula is Network metric value = $\alpha_1 \times$ Network bandwidth + $\gamma_1 \Sigma$ Network delay, where $\alpha_1$ and $\gamma_1$ are weighted values.

Optionally, the computation unit 2022 is specifically configured to obtain the computing metric value through computation based on the computing capability parameter by using a second formula or a nonlinear weighting algorithm.

The second formula is
$$\text{Computing metric value} = \frac{\alpha_2 \times \text{Throughput}}{\beta_1 - \beta_2 \times \text{Server load}} + \gamma_2 \times \text{Computing delay}$$
, where $\alpha_2$, $\beta_1$, $\beta_2$, and $\gamma_2$ are weighted values.

Optionally, the computation unit 2022 is specifically configured to: obtain a composite metric value through computation based on the computing capability parameter and the network parameter by using a third formula; and compute the route based on the composite metric value to generate a routing table.

The third formula is:

$$\text{Composite metric value} = \alpha_1 \times \text{Network bandwidth} + \frac{\alpha_2 \times \text{Throughput}}{\beta_1 - \beta_2 \times \text{Server load}} + \gamma_1 \times \Sigma \text{Network delay} +$$

$$\gamma_2 \times \text{Computing delay},$$

where $\alpha_1$, $\gamma_1$, $\alpha_2$, $\beta_1$, $\beta_2$, and $\gamma_2$ are weighted values.

Optionally, the network router 202 further includes a storage unit, configured to store the computing capability of the computing container 201 or the computing capability of the computing container 201 and an identifier of a service or function running in the computing container 201, and the network capability of the routing domain.

Optionally, the network router 202 further includes a generation unit 2023. The generation unit 2023 is configured to generate the routing table based on the identifier of the service or function and the route, and store the routing table in the storage unit.

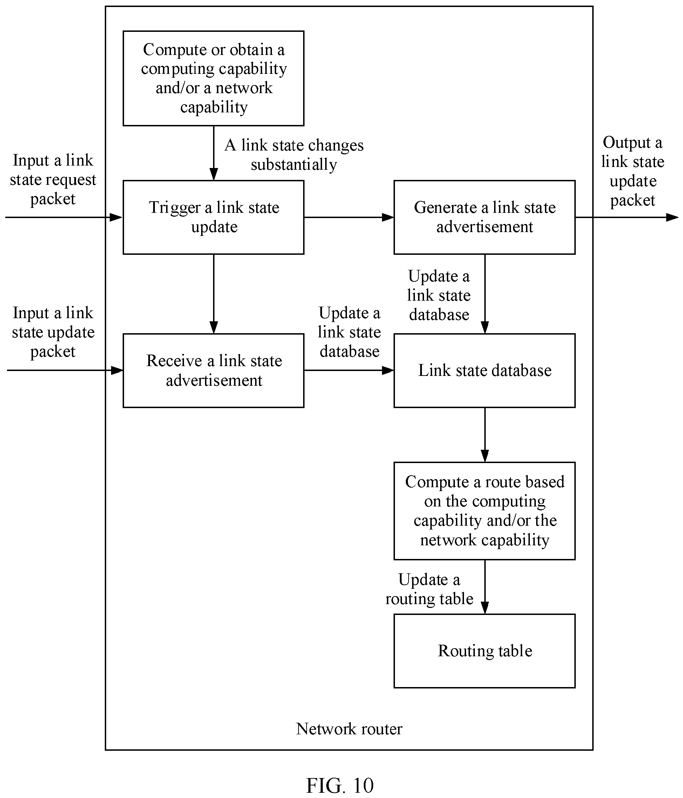

The following describes the network router 202 by using a specific functional block diagram. Specifically, referring to FIG. 10, the network router 202 obtains a link state of each interface of the network router 202. Information about the link state is used to indicate a network capability of the routing domain. The network capability includes a network metric value or a network parameter. The network parameter includes at least one piece of information of a network bandwidth and a network delay. When the network capability is the network parameter, the network router 202 may further obtain a network metric value through computation based on the network parameter by using a first formula, and store the network metric value in a storage unit (which may also be referred to as a link state database) of the network router 202. It may be understood that the network router 202 triggers a link state update when the network metric value or the network parameter substantially changes, to update the link state database. For example, when the network metric value is less than a first preset threshold or the network metric value is greater than a second preset threshold or a parameter in the network parameter is greater than a third preset threshold or less than a fourth preset threshold, the link state database of the network router 202 is updated or the network metric value or the network parameter is re-sent to a neighboring network router 202 or the computing container 201. In addition, the network router 202 may further receive a link state request (link state request, LSR) or link state update (link state update, LSU) packet sent by the neighboring network router 202 or the computing container 201. The link state request may further carry a link state advertisement of the neighboring network router or a network parameter of the routing domain or a link state advertisement of the computing container 201, and the LSU packet carries a to-be-updated direct interface state of the neighboring network router. Then, the network router 202 stores the link state advertisement of the computing container 201 or the neighboring network router and the network parameter of the routing domain. It may be understood that an agreed neighbor relationship is first established between the computing container 201 and the network router 202. Then, the computing container 201 and the network router 202 start to exchange a link state advertisement (link state advertisement, LSA) with each other. The link state advertisement may be understood as an advertisement that is generated by each routing node and that is for describing a direct interface state of the routing node (including an interface overhead, a relationship with a neighboring router, and the like). For the computing container in this embodiment of this application, the computing container generates an advertisement for describing a computing capability state of the computing container (including an identifier of a service or function and a computing capability of the computing container; and further including a relationship with a neighboring network router, and the like). Then, the network router 202 maintains the link state database of the network router 202. To be specific, after receiving the link state advertisement, the network router 202 updates a corresponding link state advertisement entry in the link state database. In brief, the network router 202 places the collected link state advertisement in the routing domain into the link state database of the network router 202, so that the network router 202 can clearly learn of a computation or resource storage topology of the entire routing domain by owning the link state database. The network router 202 may further generate a corresponding link state advertisement after triggering the link state update, and send the link state advertisement as a link state update packet to the neighboring network router or the computing container. The network router 202 computes a route based on a computing capability in the link state advertisement in the link state database. If a computing metric value and/or a network metric value already exist/exists in the link state advertisement, route computation is directly performed based on the computing metric value and the network capability to obtain a route from a service/function consumer to each computing container. If the link state advertisement carries a computing capability parameter and/or a network parameter, the network router 202 first obtains a computing metric value based on the computing capability parameter, and obtains a network metric value based on the network parameter; and then computes the route based on the computing metric value and the network metric value. In this embodiment of this application, a route computation algorithm may be a shortest path first (shortest path first, SPF) algorithm or another algorithm. This is not specifically limited herein. The SPF is a core algorithm of an IGP-type routing protocol and is used to make an optimal route selection decision in a complex network. After computation using the SPF algorithm, each computing container computes a loop-free tree that covers the entire network, has a shortest path, and roots in a service or function consumer.

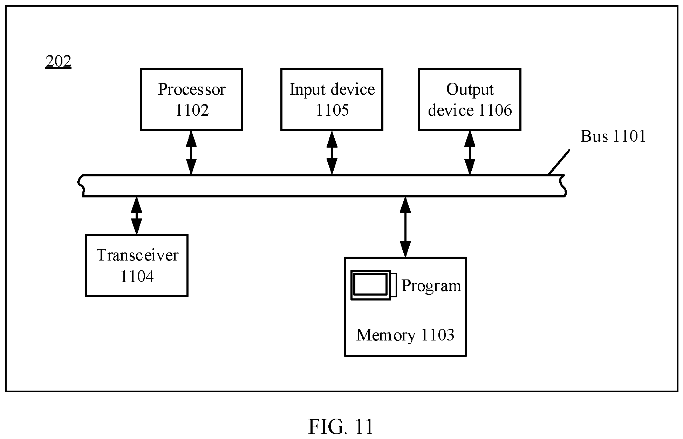

FIG. 11 shows a possible schematic structural diagram of the network router 202 according to the foregoing embodiment. The network router 202 may include: a processor 1102, a computer-readable storage medium/memory 1103, a transceiver 1104, an input device 11011, an output device 1106, and a bus 1101. The processor, the transceiver, the computer-readable storage medium, and the like are connected by using the bus. A specific connection medium between the foregoing components is not limited in this embodiment of this application.

The transceiver 1104 sends a link state request to the computing container 201.

In an example, the processor 1102 may include a baseband circuit, for example, may compute a route to generate a routing table. The transceiver 1104 may include a radio frequency circuit, to perform processing such as modulation and amplification on the link state request, and then send the link state request to the computing container.

In another example, the processor 1102 may run an operating system to control a function between each device and each component. The transceiver 1104 may include a baseband circuit and a radio frequency circuit.

It can be understood that FIG. 11 shows only a simplified design of the network router. During actual application, the network router may include any quantity of transceivers, processors, memories, and the like, and all network routers that can implement this application are within the protection scope of this application.

The processor 1102 in the network router 202 may be a general-purpose processor, for example, a general-purpose central processing unit (CPU), a network processor (network processor, NP), or a microprocessor, or may be an application-specific integrated circuit (application-specific integrated circuit, ASIC), or one or more integrated circuits configured to control program execution in the solutions of this application, or may be a digital signal processor (digital signal processor, DSP), a field programmable gate array (field-programmable gate array, FPGA) or another programmable logic device, a discrete gate or a transistor logic device, or a discrete hardware component. Alternatively, the controller/processor may be a combination of processors implementing a computation function, for example, a combination of one or more microprocessors, or a combination of a DSP and a microprocessor. The processor usually performs logical and arithmetic operations based on program instructions stored in the memory.

The bus 1101 may be a peripheral component interconnect (peripheral component interconnect, PCI) bus, an extended industry standard architecture (extended industry standard architecture, EISA) bus, and or the like. The bus may be classified into an address bus, a data bus, a control bus, and the like. For ease of representation, only one thick line is used to represent the bus in FIG. 11, but this does not mean that there is only one bus or only one type of bus.

The foregoing computer-readable storage medium/memory 1103 may further store an operating system and another application program. Specifically, the program may include program code, and the program code includes computer operation instructions. More specifically, the memory may be a read-only memory (read-only memory, ROM), another type of static storage device that can store static information and instructions, a random access memory (random access memory, RAM), another type of dynamic storage device that can store information and instructions, a magnetic disk memory, or the like. The memory 1103 may be a combination of the foregoing storage types. In addition, the computer-readable storage medium/memory may be located in the processor, or may be located outside the processor, or distributed on a plurality of entities including the processor or a processing circuit. The computer-readable storage medium/memory may be specifically embodied in a computer program product. For example, the computer program product may include a computer-readable medium in a packaging material.

Alternatively, an embodiment of this application further provides a universal processing system. For example, the universal processing system is usually referred to as a chip. The universal processing system includes one or more microprocessors that provide a processor function, and an external memory that provides at least a part of a storage medium. All these components are connected to another supporting circuit by using an external bus architecture. When instructions stored in the memory are executed by the processor, the processor is enabled to perform some or all steps of the network router in the route computation method.

Method or algorithm steps described in combination with the content disclosed in this application may be implemented by hardware, or may be implemented by a processor by executing software instructions. The software instructions may be formed by a corresponding software module. The software module may be located in a RAM memory, a flash memory, a ROM memory, an EPROM memory, an EEPROM memory, a register, a hard disk, a removable hard disk, a CD-ROM, or a storage medium of any other form known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in user equipment. Certainly, the processor and the storage medium may exist in the user equipment as discrete components.

In this embodiment of this application, the network router performs route computation based on the computing capability of the computing container and the network parameter, to achieve optimal computation and network resource utilization.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

**Claims**

1.   A routing domain, comprising:

        a computing container (201) and a network router (202), wherein
        the network router (202) is a routing node that supports route computation;
        the computing container (201) is connected to the network router (202) through a virtual link;
        the computing container (201) is configured to: run a routing protocol, wherein the routing protocol is used to carry a computing capability of the computing container (201) or the computing capability of the computing container (201) and an identifier of a service or function; and send the computing capability of the computing container (201) or the computing capability of the computing container (201) and the identifier of the service or function to the network router (202) by using the routing protocol; and
the network router (202) is configured to: obtain the computing capability, and obtain a network capability of the routing domain; compute a route based on the computing capability; or compute a route based on the computing capability and the network capability; and diffuse the computing capability or the computing capability and the identifier of the service or function to each network router in the routing domain and/or to another routing domain.

2. The routing domain according to claim 1, wherein that the computing container (201) sends the computing capability of the computing container or the computing capability of the computing container and the identifier of the service or function to the network router (202) comprises:
the computing container (201) sends a virtual link state to the network router (202), wherein the virtual link state is used to indicate the computing capability or the computing capability and the identifier of the service or function.

3. The routing domain according to claim 1, wherein the computing container (201) is further configured to compute the route based on the computing capability; or

the computing container (201) is further configured to: obtain the network capability, and compute the route based on the computing capability and the network capability, wherein
the route computed by the computing container (201) is a route from a service or function user to each computing container in the routing domain.

4. The routing domain according to any one of claims 1 to 3, wherein the computing capability comprises a computing capability parameter or a computing metric value, and the computing capability parameter comprises at least one of a throughput, a server load, and a computing delay; and
the network capability comprises a network metric value or a network parameter, and the network parameter comprises at least one of a network bandwidth and a network delay.

5. The routing domain according to claim 4, wherein the computing the route based on the computing capability comprises: obtaining the computing metric value based on the computing capability parameter; and computing the route based on the computing metric value.

6. The routing domain according to claim 4, wherein the computing the route based on the computing capability and the network capability comprises:
obtaining the computing metric value based on the computing capability parameter, and obtaining the network metric value based on the network parameter; and computing the route based on the computing metric value and the network metric value.

7. The routing domain according to claim 6, wherein the obtaining the network metric value based on the network parameter comprises: obtaining the network metric value through computation based on the network parameter by using a first formula or a nonlinear weighting algorithm, wherein
the first formula is Network metric value = $\alpha_1 \times$ Network bandwidth + $y_1\Sigma$ Network delay, wherein $\alpha_1$ and $\gamma_1$ are weighted values.

8. The routing domain according to claim 5 or 6, wherein the obtaining the computing metric value based on the computing capability parameter comprises: obtaining the computing metric value through computation based on the computing capability parameter by using a second formula or a nonlinear weighting algorithm, wherein

the second formula is $\text{Computing metric value} = \frac{\alpha_2 \times \text{Throughput}}{\beta_1 - \beta_2 \times \text{Server load}} + \gamma_2 \times \text{Computing delay}$ , wherein $\alpha_2$, $\beta_1$, $\beta_2$, and $\gamma_2$ are weighted values.

9. The routing domain according to claim 4, wherein the computing the route based on the computing capability and the network capability comprises: obtaining a composite metric value through computation based on the computing capability parameter and the network parameter by using a third formula; and

computing the route based on the composite metric value to generate a routing table, wherein

the                                   third                                   formula                                   is:

$$\text{Composite metric value} = \alpha_1 \times \text{Network bandwidth} + \frac{\alpha_2 \times \text{Throughput}}{\beta_1 - \beta_2 \times \text{Server load}} + \gamma_1 \times \sum \text{Network delay} + \gamma_2 \times$$

Computing delay, wherein
$\alpha_1$, $\gamma_1$, $\alpha_2$, $\beta_1$, $\beta_2$, and $\gamma_2$ are weighted values.

10. The routing domain according to any one of claims 1 to 9, wherein the network router is further configured to generate the routing table based on the identifier of the service or function and the route.

11. A route computation method, applied to a routing domain comprising a computing container (201) and a network router (202), wherein the network router (202) is a routing node that supports route computation; and the method comprises:

running, by the computing container (201), a routing protocol, wherein the routing protocol is used to carry a computing capability of the computing container (201) or the computing capability of the computing container (201) and an identifier of a service or function, and sending the computing capability of the computing container (201) or the computing capability of the computing container (201) and the identifier of the service or function to the network router (202) by using the routing protocol;
obtaining, by the network router (202), the computing capability, and obtaining a network capability of the routing domain;
computing, by the network router (202), a route based on the computing capability, or computing a route based on the computing capability and the network capability; and
diffusing, by the network router (202), the computer capability or the computing capability and the identifier of the service or function to each network router in the routing domain and/or to another routing domain.

12. The method according to claim 11, wherein the sending the computing capability of the computing container (201) or the computing capability and the identifier of the service or function to the network router (202) comprises:
sending, by the computing container (201), a virtual link state to the network router, wherein the virtual link state is used to indicate the computing capability or the computing capability and the identifier of the service or function.

13. The method according to claim 11, wherein the method further comprises:

computing, by the computing container (201), the route based on the computing capability; or
obtaining, by the computing container (201), the network capability, and computing, by the computing container (201), the route based on the computing capability and the network capability, wherein
the route computed by the computing container (201) is a route from a service or function user to each computing container (201) in the routing domain.

14. The method according to any one of claims 11 to 13, wherein the computing capability comprises a computing capability parameter or a computing metric value, and the computing capability parameter comprises at least one of a throughput, a server load, and a computing delay; and
the network capability comprises a network metric value or a network parameter, and the network parameter comprises at least one of a network bandwidth and a network delay.

**Patentansprüche**

1. Routing-Bereich, umfassend:

einen Rechencontainer (201) und einen Netzwerkrouter (202), wobei
der Netzwerkrouter (202) ein Routing-Knoten ist, der Routenberechnung unterstützt;
der Rechencontainer (201) über eine virtuelle Verbindung mit dem Netzwerkrouter (202) verbunden ist;
der Rechencontainer (201) zu Folgendem konfiguriert ist:

Ausführen eines Routing-Protokolls, wobei das Routing-Protokoll verwendet wird, um eine Rechenleistungsfähigkeit des Rechencontainers (201) oder die Rechenleistungsfähigkeit des Rechencontainers (201) und eine Kennung eines Dienstes oder einer Funktion zu übertragen; und Senden der Rechenleistungsfähigkeit des Rechencontainers (201) oder der Rechenleistungsfähigkeit des Rechencontainers (201) und der Kennung des Dienstes oder der Funktion an den Netzwerkrouter (202) unter Verwendung des Routing-Protokolls; und

der Netzwerkrouter (202) zu Folgendem konfiguriert ist:

Erlangen der Rechenleistungsfähigkeit und Erlangen einer Netzwerkleistungsfähigkeit des Routing-Bereichs; Berechnen einer Route basierend auf der Rechenleistungsfähigkeit; oder

Berechnen einer Route basierend auf der Rechenleistungsfähigkeit und der Netzwerkleistungsfähigkeit;

und Verbreiten der Rechenleistungsfähigkeit oder der Rechenleistungsfähigkeit und der Kennung des Dienstes oder der Funktion an jeden Netzwerkrouter in dem Routing-Bereich und/oder an einen anderen Routing-Bereich.

2. Routing-Bereich nach Anspruch 1, wobei das Senden der Rechenleistungsfähigkeit des Rechencontainers oder der Rechenleistungsfähigkeit des Rechencontainers und der Kennung des Dienstes oder der Funktion durch den Rechencontainer (201) an den Netzwerkrouter (202) Folgendes umfasst:

der Rechencontainer (201) sendet einen virtuellen Verbindungsstatus an den Netzwerkrouter (202), wobei der virtuelle Verbindungsstatus verwendet wird, um die Rechenleistungsfähigkeit oder die Rechenleistungsfähigkeit und die Kennung des Dienstes oder der Funktion anzuzeigen.

3. Routing-Bereich nach Anspruch 1, wobei der Rechencontainer (201) ferner dazu konfiguriert ist, die Route basierend auf der Rechenleistungsfähigkeit zu berechnen; oder

der Rechencontainer (201) ferner zu Folgendem konfiguriert ist: Erlangen der Netzwerkleistungsfähigkeit und Berechnen der Route basierend auf der Rechenleistungsfähigkeit und der Netzwerkleistungsfähigkeit, wobei die Route, die von dem Rechencontainer (201) berechnet wird, eine Route von einem Dienst- oder Funktionsbenutzer zu jedem Rechencontainer in dem Routing-Bereich ist.

4. Routing-Bereich nach einem der Ansprüche 1 bis 3, wobei die Rechenleistungsfähigkeit einen Rechenleistungsfähigkeitsparameter oder einen Rechenmetrikwert umfasst und der Rechenleistungsfähigkeitsparameter mindestens eines von einem Durchsatz, einer Serverlast und einer Rechenverzögerung umfasst; und

die Netzwerkleistungsfähigkeit einen Netzwerkmetrikwert oder einen Netzwerkparameter umfasst und der Netzwerkparameter mindestens eines von einer Netzwerkbandbreite und einer Netzwerkverzögerung umfasst.

5. Routing-Bereich nach Anspruch 4, wobei das Berechnen der Route basierend auf der Rechenleistungsfähigkeit Folgendes umfasst: Erlangen des Rechenmetrikwerts basierend auf dem Rechenleistungsfähigkeitsparameter; und Berechnen der Route basierend auf dem Rechenmetrikwert.

6. Routing-Bereich nach Anspruch 4, wobei das Berechnen der Route basierend auf der Rechenleistungsfähigkeit und der Netzwerkleistungsfähigkeit Folgendes umfasst:

Erlangen des Rechenmetrikwerts basierend auf dem Rechenleistungsfähigkeitsparameter und Erlangen des Netzwerkmetrikwerts basierend auf dem Netzwerkparameter; und

Berechnen der Route basierend auf dem Rechenmetrikwert und dem Netzwerkmetrikwert.

7. Routing-Bereich nach Anspruch 6, wobei das Erlangen des Netzwerkmetrikwerts basierend auf dem Netzwerkparameter Folgendes umfasst: Erlangen des Netzwerkmetrikwerts durch Berechnung basierend auf dem Netzwerkparameter unter Verwendung einer ersten Formel oder eines nichtlinearen Gewichtungsalgorithmus, wobei

die erste Formel Netzwerkmetrikwert = $\alpha_1 \times$ Netzwerkbandbreite + $\gamma_1 \Sigma$Netzwerkverzögerung lautet, wobei $\alpha_1$ und $\gamma_1$ gewichtete Werte sind.

8. Routing-Bereich nach Anspruch 5 oder 6, wobei das Erlangen des Rechenmetrikwerts basierend auf dem Rechenleistungsfähigkeitsparameter Folgendes umfasst: Erlangen des Rechenmetrikwerts durch Berechnung basierend auf dem Rechenleistungsfähigkeitsparameter unter Verwendung einer zweiten Formel oder eines nichtlinearen Gewichtungsalgorithmus, wobei

$$\text{Formel} \quad \text{Rechenmetrikwert} \quad = \quad \frac{\alpha_2 \times \text{Durchsatz}}{\beta_1 - \beta_2 \times \text{Serverlast}} + \gamma_2 \times \text{Re-}$$

die zweite rechenverzögerung lautet, wobei $\alpha_2$, $\beta_1$, $\beta_2$ und $\gamma_2$ gewichtete Werte sind.

9. Routing-Bereich nach Anspruch 4, wobei das Berechnen der Route basierend auf der Rechenleistungsfähigkeit und der Netzwerkleistungsfähigkeit Folgendes umfasst: Erlangen eines zusammengesetzten Metrikwerts durch Berechnung basierend auf dem Rechenleistungsfähigkeitsparameter und dem Netzwerkparameter unter Verwendung einer dritten Formel; und Berechnen der Route basierend auf dem zusammengesetzten Metrikwert, um eine Routing-Tabelle zu erzeugen, wobei die dritte Formel wie folgt lautet:

Zusammengesetzter Metrikwert $= \alpha_1 \times$ Netzwerkbandbreite $+$

$\frac{\alpha_2 \times \text{Durchsatz}}{\beta_1 - \beta_2 \times \text{Serverlast}} + \gamma_1 \times \Sigma\text{Netzwerkverzögerung} + \gamma_2 \times$

Rechenverzögerung, wobei $\alpha_1$, $\gamma_1$, $\alpha_2$, $\beta_1$, $\beta_2$ und $\gamma_2$ gewichtete Werte sind.

10. Routing-Bereich nach einem der Ansprüche 1 bis 9, wobei der Netzwerkrouter ferner dazu konfiguriert ist, die Routing-Tabelle basierend auf der Kennung des Dienstes oder der Funktion und der Route zu erzeugen.

11. Routing-Berechnungsverfahren, das auf einen Routing-Bereich, umfassend einen Rechencontainer (201) und einen Netzwerkrouter (202), angewendet wird, wobei der Netzwerkrouter (202) ein Routing-Knoten, der Routenberechnung unterstützt, ist; und das Verfahren Folgendes umfasst:

Ausführen, durch den Rechencontainer (201), eines Routing-Protokolls, wobei das Routing-Protokoll verwendet wird, um eine Rechenleistungsfähigkeit des Rechencontainers (201) oder die Rechenleistungsfähigkeit des Rechencontainers (201) und eine Kennung eines Dienstes oder einer Funktion zu übertragen, und Senden der Rechenleistungsfähigkeit des Rechencontainers (201) oder der Rechenleistungsfähigkeit des Rechencontainers (201) und der Kennung des Dienstes oder der Funktion an den Netzwerkrouter (202) unter Verwendung des Routing-Protokolls;
Erlangen, durch den Netzwerkrouter (202), der Rechenleistungsfähigkeit und Erlangen einer Netzwerkleistungsfähigkeit des Routing-Bereichs;
Berechnen, durch den Netzwerkrouter (202), einer Route basierend auf der Rechenleistungsfähigkeit oder Berechnen einer Route basierend auf der Rechenleistungsfähigkeit und der Netzwerkleistungsfähigkeit; und
Verbreiten, durch den Netzwerkrouter (202), der Rechenleistungsfähigkeit oder der Rechenleistungsfähigkeit und der Kennung des Dienstes oder der Funktion an jeden Netzwerkrouter in dem Routing-Bereich und/oder an einen anderen Routing-Bereich.

12. Verfahren nach Anspruch 11, wobei das Senden der Rechenleistungsfähigkeit des Rechencontainers (201) oder der Rechenleistungsfähigkeit und der Kennung des Dienstes oder der Funktion an den Netzwerkrouter (202) Folgendes umfasst:
Senden, durch den Rechencontainer (201), eines virtuellen Verbindungsstatus an den Netzwerkrouter, wobei der virtuelle Verbindungsstatus verwendet wird, um die Rechenleistungsfähigkeit oder die Rechenleistungsfähigkeit und die Kennung des Dienstes oder der Funktion anzuzeigen.

13. Verfahren nach Anspruch 11, wobei das Verfahren ferner Folgendes umfasst:

Berechnen, durch den Rechencontainer (201), der Route basierend auf der Rechenleistungsfähigkeit; oder Erlangen, durch den Rechencontainer (201), der Netzwerkleistungsfähigkeit und Berechnen, durch den Rechencontainer (201), der Route basierend auf der Rechenleistungsfähigkeit und der Netzwerkleistungsfähigkeit, wobei
die Route, die von dem Rechencontainer (201) berechnet wird, eine Route von einem Dienst- oder Funktionsbenutzer zu jedem Rechencontainer (201) in dem Routing-Bereich ist.

14. Verfahren nach einem der Ansprüche 11 bis 13, wobei die Rechenleistungsfähigkeit einen Rechenleistungsfähigkeitsparameter oder einen Rechenmetrikwert umfasst und der Rechenleistungsfähigkeitsparameter mindestens eines von einem Durchsatz, einer Serverlast und einer Rechenverzögerung umfasst; und
die Netzwerkleistungsfähigkeit einen Netzwerkmetrikwert oder einen Netzwerkparameter umfasst und der Netzwerkparameter mindestens eines von einer Netzwerkbandbreite und einer Netzwerkverzögerung umfasst.

## Revendications

1. Domaine de routage, comprenant :

   un conteneur de calcul (201) et un routeur réseau (202), dans lequel
   le routeur réseau (202) est un noeud de routage qui prend en charge le calcul de routage ;
   le conteneur de calcul (201) est connecté au routeur réseau (202) par le biais d'une liaison virtuelle ;
   le conteneur de calcul (201) est configuré pour : exécuter un protocole de routage, dans lequel le protocole de routage est utilisé pour transporter une capacité de calcul du conteneur de calcul (201) ou la capacité de calcul du conteneur de calcul (201) et un identifiant d'un service ou d'une fonction ; et envoyer la capacité de calcul du conteneur de calcul (201) ou la capacité de calcul du conteneur de calcul (201) et l'identifiant du service ou de la fonction au routeur réseau (202) à l'aide du protocole de routage ; et
   le routeur réseau (202) est configuré pour : obtenir la capacité de calcul et obtenir une capacité de réseau du domaine de routage ; calculer un itinéraire sur la base de la capacité de calcul ; ou calculer un itinéraire sur la base de la capacité de calcul et la capacité de réseau ; et diffuser la capacité de calcul ou la capacité de calcul et l'identifiant du service ou de la fonction à chaque routeur réseau du domaine de routage et/ou à un autre domaine de routage.

2. Domaine de routage selon la revendication 1, dans lequel le conteneur de calcul (201) envoie la capacité de calcul du conteneur de calcul ou la capacité de calcul du conteneur de calcul et l'identifiant du service ou de la fonction au routeur réseau (202) comprend :
   le conteneur de calcul (201) envoie un état de liaison virtuelle au routeur réseau (202), dans lequel l'état de liaison virtuelle est utilisé pour indiquer la capacité de calcul ou la capacité de calcul et l'identifiant du service ou de la fonction.

3. Domaine de routage selon la revendication 1, dans lequel le conteneur de calcul (201) est également configuré pour calculer l'itinéraire sur la base de la capacité de calcul ; ou

   le conteneur de calcul (201) est également configuré pour : obtenir la capacité de réseau, et calculer l'itinéraire sur la base de la capacité de calcul et de la capacité de réseau, dans lequel
   l'itinéraire calculé par le conteneur de calcul (201) est un itinéraire depuis un utilisateur de service ou de fonction vers chaque conteneur de calcul dans le domaine de routage.

4. Domaine de routage selon l'une quelconque des revendications 1 à 3, dans lequel la capacité de calcul comprend un paramètre de capacité de calcul ou une valeur métrique de calcul, et le paramètre de capacité de calcul comprend au moins l'un d'un débit, d'une charge de serveur et d'un délai de calcul ; et
   la capacité de réseau comprend une valeur métrique de réseau ou un paramètre de réseau, et le paramètre de réseau comprend au moins l'un d'une bande passante de réseau et d'un délai de réseau.

5. Domaine de routage selon la revendication 4, dans lequel le calcul de l'itinéraire sur la base de la capacité de calcul comprend : l'obtention de la valeur métrique de calcul sur la base du paramètre de capacité de calcul ; et le calcul de l'itinéraire sur la base de la valeur métrique de calcul.

6. Domaine de routage selon la revendication 4, dans lequel le calcul de l'itinéraire sur la base de la capacité de calcul et de la capacité de réseau comprend :
   l'obtention de la valeur métrique de calcul sur la base du paramètre de capacité de calcul, et l'obtention de la valeur métrique de réseau sur la base du paramètre de réseau ; et le calcul de l'itinéraire sur la base de la valeur métrique de calcul et de la valeur métrique de réseau.

7. Domaine de routage selon la revendication 6, dans lequel l'obtention de la valeur métrique de réseau sur la base du paramètre de réseau comprend : l'obtention de la valeur métrique de réseau par un calcul sur la base du paramètre de réseau à l'aide d'une première formule ou d'un algorithme de pondération non linéaire, dans lequel

la première formule est Valeur métrique du réseau = $\alpha_1 \times$ Bande passante du réseau + $\gamma_1 \Sigma$Délai du réseau, dans lequel

$\alpha_1$ et $\gamma_1$ sont des valeurs pondérées.

8. Domaine de routage selon la revendication 5 ou 6, dans lequel l'obtention de la valeur métrique de calcul sur la base du paramètre de capacité de calcul comprend : l'obtention de la valeur métrique de calcul par un calcul sur la base du paramètre de capacité de calcul à l'aide d'une deuxième formule ou d'un algorithme de pondération non linéaire, dans lequel

la deuxième formule est Valeur métrique de calcul =

$$\frac{\alpha_2 \times \text{Débit}}{\beta_1 - \beta_2 \times \text{Charge du serveur}} + \gamma_2 \times \text{Délai de calcul}$$ , dans lequel

$\alpha_2$, $\beta_1$, $\beta_2$ et $\gamma_2$ sont des valeurs pondérées.

9. Domaine de routage selon la revendication 4, dans lequel le calcul de l'itinéraire sur la base de la capacité de calcul et de la capacité de réseau comprend : l'obtention d'une valeur métrique composite par un calcul sur la base du paramètre de capacité de calcul et du paramètre de réseau à l'aide d'une troisième formule ; et

le calcul de l'itinéraire sur la base de la valeur métrique composite pour générer une table de routage, dans lequel la troisième formule est : Valeur métrique composite = $\alpha_1 \times$ Bande passante du réseau +

$$\frac{\alpha_2 \times \text{Débit}}{\beta_1 - \beta_2 \times \text{Charge du serveur}} + \gamma_1 \times \Sigma\text{Délai du réseau} + \gamma_2 \times \text{Délai de calcul}$$

,

dans lequel

$\alpha_1$, $\gamma_1$, $\alpha_2$, $\beta_1$, $\beta_2$, et $\gamma_2$ sont des valeurs pondérées.

10. Domaine de routage selon l'une quelconque des revendications 1 à 9, dans lequel le routeur réseau est également configuré pour générer la table de routage sur la base de l'identifiant du service ou de la fonction et de l'itinéraire.

11. Procédé de calcul d'itinéraire, appliqué à un domaine de routage comprenant un conteneur de calcul (201) et un routeur réseau (202), dans lequel le routeur réseau (202) est un noeud de routage qui prend en charge le calcul d'itinéraire ; et le procédé comprend :

l'exécution, par le conteneur de calcul (201), d'un protocole de routage, dans lequel le protocole de routage est utilisé pour transporter une capacité de calcul du conteneur de calcul (201) ou la capacité de calcul du conteneur de calcul (201) et un identifiant d'un service ou d'une fonction ; et l'envoi de la capacité de calcul du conteneur de calcul (201) ou de la capacité de calcul du conteneur de calcul (201) et l'identifiant du service ou de la fonction au routeur réseau (202) à l'aide du protocole de routage ;
l'obtention, par le routeur réseau (202), de la capacité de calcul, et l'obtention d'une capacité de réseau du domaine de routage ;
le calcul, par le routeur réseau (202), d'un itinéraire sur la base de la capacité de calcul, ou le calcul d'un itinéraire sur la base de la capacité de calcul et de la capacité de réseau ; et
la diffusion, par le routeur réseau (202), de la capacité de réseau ou de la capacité de calcul et de l'identifiant du service ou de la fonction à chaque routeur réseau du domaine de routage et/ou à un autre domaine de routage.

12. Procédé selon la revendication 11, dans lequel l'envoi de la capacité de calcul du conteneur de calcul (201) ou de la capacité de calcul et de l'identifiant du service ou de la fonction au routeur réseau (202) comprend :
l'envoi, par le conteneur de calcul (201), d'un état de liaison virtuelle au routeur réseau, dans lequel l'état de liaison virtuelle est utilisé pour indiquer la capacité de calcul ou la capacité de calcul et l'identifiant du service ou de la fonction.

13. Procédé selon la revendication 11, dans lequel le procédé comprend également :

le calcul, par le conteneur de calcul (201), de l'itinéraire sur la base de la capacité de calcul ; ou
l'obtention, par le conteneur de calcul (201), de la capacité de réseau, et le calcul, par le conteneur de calcul (201), de l'itinéraire sur la base de la capacité de calcul et de la capacité de réseau, dans lequel
l'itinéraire calculé par le conteneur de calcul (201) est un itinéraire depuis un utilisateur de service ou de fonction vers chaque conteneur de calcul (201) dans le domaine de routage.

14. Procédé selon l'une quelconque des revendications 11 à 13, dans lequel la capacité de calcul comprend un paramètre de capacité de calcul ou une valeur métrique de calcul, et le paramètre de capacité de calcul comprend au moins l'un d'un débit, d'une charge de serveur et d'un délai de calcul ; et
la capacité de réseau comprend une valeur métrique de réseau ou un paramètre de réseau, et le paramètre de réseau comprend au moins l'un d'une bande passante de réseau et d'un délai de réseau.

FIG. 1

FIG. 2

Extend a routing domain including a computation node

Router

FIG. 3

| Route | Network capability | Computing capability |
|-------|--------------------|----------------------|
| X → U | 111 | 222 |
| Y → U | 123 | 201 |
| ... | ... | ... |

Run a routing protocol

Computing container X — Routing protocol — Network router u — Routing protocol — Computing container Y

FIG. 4

2011 Obtaining unit

2012 Running unit

2013 Sending unit

201

2014 Computation unit

2015 Storage unit

FIG. 5

Benchmark service or
function program

Compute or obtain a
computing capability

Input a link
state request
packet

The computing capability
changes substantially

Output a
link state
update
packet

Trigger a link state
update

Generate a link state
advertisement

Update a link
state database

Input a link
state update
packet

Receive a link state
advertisement

Update a
link state
database

Link state database

Compute a route from a
function consumer to
each computing
container based on the
computing capability
and/or a network
capability

Output a
dynamic
service or
function
instantiation
request packet

If the
specific
computing
container
is not a
current
container

Generate service or
function instantiation
location information
and send the location
information

Determine a specific
computing container,
where a route from the
computing container to
a service or function is
optimal

Computing container

FIG. 6

Input a link state request packet →

**Trigger a link state update**

**Generate a link state advertisement** → Output a link state update packet

Input a link state update packet →

Update a link state database ↓

**Receive a link state advertisement**

Update a link state database →

**Link state database**

**Compute a route from a function consumer to each computing container based on a computing capability and/or a network capability**

Output a dynamic service or function instantiation request packet ←

**Generate service or function instantiation location information and send the location information** ←

**Determine a specific computing container, where a route from the computing container to a service or function is optimal**

Application software or operating system

FIG. 7

**FIG. 8**

**FIG. 9**

Compute or obtain a
computing capability
and/or a network
capability

Input a link
state request
packet

A link state changes
substantially

Output a
link state
update
packet

Trigger a link state
update

Generate a link state
advertisement

Update a
link state
database

Input a link
state update
packet

Update a
link state
database

Receive a link state
advertisement

Link state database

Compute a route based
on the computing
capability and/or the
network capability

Update a
routing table

Routing table

Network router

FIG. 10

FIG. 11

**EP 3 907 941 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017070426 A1
- US 2006101142 A1